(19) Europäisches Patentamt
European Patent Office
Office européen des brevets

(11) EP 0 620 244 B1

## (12) EUROPEAN PATENT SPECIFICATION

(45) Date of publication and mention
of the grant of the patent:
**30.06.1999 Bulletin 1999/26**

(51) Int Cl.⁶: **C08J 5/18**, C08L 77/00,
B32B 27/34, B29C 55/00

(21) Application number: **94105544.4**

(22) Date of filing: **11.04.1994**

(54) **Biaxially stretched film for food packaging**

Biaxial-gestreckte Folie für Nahrungsverpackung

Film orienté biaxialement pour emballage de nourriture

(84) Designated Contracting States:
**DE FR IT NL**

(30) Priority: **13.04.1993 JP 11005893**

(43) Date of publication of application:
**19.10.1994 Bulletin 1994/42**

(73) Proprietor: **KUREHA KAGAKU KOGYO
KABUSHIKI KAISHA
Chuo-ku Tokyo 103 (JP)**

(72) Inventors:
• **Hisazumi, Nobuyuki
Tsuchiura-shi, Ibaraki-ken (JP)**
• **Uehara, Tsutomu
Niihari-gun, Ibaraki-ken (JP)**

• **Sato, Tomoaki
Niihari-gun, Ibaraki-ken (JP)**

(74) Representative:
**Hansen, Bernd, Dr. Dipl.-Chem. et al
Hoffmann Eitle,
Patent- und Rechtsanwälte,
Arabellastrasse 4
81925 München (DE)**

(56) References cited:
**EP-A- 0 287 839       EP-A- 0 514 146
DE-A- 4 001 612**

• **DATABASE WPI Week 9316, Derwent
Publications Ltd., London, GB; AN 93-128997 &
JP-A-5 064 866 (MITSUI DU PONT
POLYCHEMICAL) 19 March 1993**

## Description

BACKGROUND OF THE INVENTION

The present invention relates to a biaxially stretched film for food packaging having a layer composed of a polyamide-based mixed resin and a process for its production. More particularly it relates to a biaxially stretched food packaging film having at least one layer composed of an aliphatic polyamide, an amorphous polyamide, a xylilene-based polyamide and a nylon 6-modified ionomer or a mixture of a nylon 6-modified ionomer and a polyolefin, and having excellent transparency, oxygen-gas barrier properties, moisture permeation resistance, toughness and flexibility.

Thermoplastic films containing polyamides are popularly used in the field of food packaging. Films of aliphatic polyamides which are a popular resin in polyamides, have many excellent properties such as high toughness, oil resistance and transparency, but they also involve some serious problems: they are deteriorated in oxygen-gas barrier properties under a high-humidity condition because of hygroscopicity, and may show unsatisfactory in mechanical strength when subjected to a severe treatment such as boiling treatment or retort sterilization.

Also, resistance to moisture vapor permeability of the film is low due to the moisture-absorption, and there would take place loss of weight and/or deterioration of flavor and taste of the packaged food due to dissipation of moisture in food through the films during long-time storage of packaged food. Thus, the aliphatic polyamide films were unsatisfactory for practical use.

In an effort to overcome these defects of aliphatic polyamide films, there have been proposed a biaxially stretched film composed of a mixture of an aliphatic polyamide and a xylilene-based polyamide, and improved in pinhole resistance, elasticity and gas barrier properties (Japanese Patent Publication (KOKOKU) Nos. 51-29193 and 63-43217) and a heat-shrinkable multi-layered film composed of an aliphatic polyamide and an amorphous polyamide and improved in stretchability and heat shrinking properties (Japanese Patent Application Laid-Open (KOKAI) No. 3-63133).

There has also been proposed a polyamide film composed of a mixture of a crystalline polyamide mainly composed of a xylilenediamine and a dicarboxylic acid, and an amorphous polyamide mainly composed of isophthalic acid, terephthalic acid and a diamine, and having excellent oxygen barrier properties and transparency (Japanese Patent Application Laid-Open (KOKAI) No. 64-6056).

However, any of the conventional films mentioned above was still unsatisfactory for use as a practical food packaging film which has an excellent stretchability, is easy to produce, can endure to hot water used in boiling treatment, retort sterilization, etc., and is also well balanced in terms of properties such as gas barrier properties, a transparency, a moisture permeation resistance, a toughness and a flexibility.

Thus, the offer of a food packaging film having these properties in a well-balanced manner has been desired.

As a result of the present inventors' earnest researches for solving the said problems, it has been found that a biaxially stretched film having at least one layer composed of a polyamide-based mixed resin composed of 20 to 70 wt% of an aliphatic polyamide, 5 to 35 wt% of an amorphous polyamide, 5 to 45 wt% of a xylilene-based polyamide and 5 to 50 wt% of a nylon 6-modified ionomer as defined in claim 1 and 2 or 15 to 50 wt% of a mixture of a polyamide-modified ionomer and a polyolefin (the content of the said polyamide-modified ionomer is at least 5 wt% based on the polyamide-based mixed resin), or a biaxially stretched multi-layered film composed of at least one layer of the said polyamide-based mixed resin, at least one adhesive layer and at least one polyolefins layer, has excellent heat resistance, oxygen-gas barrier properties,
transparency, moisture permeation resistance, flexibility, heat-shrinking properties and toughness in a well-balanced manner. The present invention has been attained on the basis of this finding.

SUMMARY OF THE INVENTION

An object of the present invention is to provide a biaxially stretched food packaging film having at least one layer composed of a polyamide-based mixed resin and having excellent heat resistance, oxygen-gas barrier properties, transparency, moisture permeation resistance, flexibility, heat-shrinkable properties and toughness.

Another object of the present invention is to provide a biaxially stretched food packaging film which is easy to produce, can endure to hot water used in boiling treatment, retort sterilization, etc., and has excellent oxygen-gas barrier properties, transparency, moisture permeation resistance and flexibility in a well balanced manner.

To achieve the aims, in a first aspect of the present invention, there is provided a biaxially stretched food packaging film having at least one layer composed of a polyamide-based mixed resin containing 20 to 70 wt% of an aliphatic polyamide, 5 to 35 wt% of an amorphous polyamide, 5 to 45 wt% of a xylilene-based polyamide and 5 to 50 wt% of a nylon 6-modified ionomer as defined in claim 1, and having a haze of not more than 10%, an oxygen permeability at 30°C and 100% RH of not more than 200 $cm^3/m^2 \cdot day \cdot atm$ and an elasticity at 1% elongation of $1.97 \times 10^2$ to $19.7 \times 10^2$ MPa.

In a second aspect of the present invention, there is provided a biaxially stretched food packaging film having at least one layer composed of a polyamide-based mixed resin containing 20 to 70 wt% of an aliphatic polyamide, 5 to 35 wt% of an amorphous polyamide, 5 to 45 wt% of a xylilene-based polyamide and 15 to 50 wt% of a mixture of a nylon 6-modified ionomer as defined in claim 2 and a polyolefin, the content of the said nylon 6-modified ionomer being at least 5 wt% based on the polyamide-based mixed resin, and having a haze of not more than 10%, an oxygen permeability at 30°C and 100% RH of not more than 200 $cm^3/m^2 \cdot day \cdot atm$ and an elasticity at 1% elongation of 1.97 x $10^2$ to 19.7 x $10^2$ MPa.

In a third aspect of the present invention, there is provided a biaxially stretched food packaging film comprising a three-layered film composed of a polyamide-based mixed resin layer, an adhesive layer and a polyolefins layer, in order,

wherein the said polyamide-based mixed resin layer is composed of a polyamide-based mixed resin containing 20 to 70 wt% of an aliphatic polyamide, 5 to 35 wt% of an amorphous polyamide, 5 to 45 wt% of a xylilene-based polyamide and 5 to 50 wt% of a nylon 6-modified ionomer as defined in the claims, and having a haze of not more than 10%, an oxygen permeability at 30°C and 100% RH of not more than 200 $cm^3/m^2 \cdot day \cdot atm$ and an elasticity at 1% elongation of 1.97 x $10^2$ to 19.7 x $10^2$ MPa.

In a fourth aspect of the present invention, there is provided a biaxially stretched food packaging film comprising a three-layered film composed of a polyamidebased mixed resin layer, an adhesive layer and a polyolefins layer, in order,

wherein the said polyamide-based mixed resin layer is composed of a polyamide-based mixed resin containing 20 to 70 wt% of an aliphatic polyamide, 5 to 35 wt% of an amorphous polyamide, 5 to 45 wt% of a xylilene-based polyamide and 15 to 50 wt% of a mixture of a nylon 6-modified ionomer as defined in the claims and a polyolefin, the content of the said nylon 6-modified ionomer being at least 5 wt% based on the polyamide-based mixed resin, and having a haze of not more than 10%, an oxygen permeability at 30°C and 100% RH of not more than 200 $cm^3/m^2 \cdot day \cdot atm$ and an elasticity at 1% elongation of 1.97 x $10^2$ to 19.7 x $10^2$ MPa.

In a fifth aspect of the present invention, there is provided a biaxially stretched food packaging film comprising a five-layered film composed of a polyamide-based mixed resin layer, an adhesive layer, a polyolefins layer, an adhesive layer and a polyamide-based mixed resin layer, in order,

wherein the said polyamide-based mixed resin layer is composed of a polyamide-based mixed resin containing 20 to 70 wt% of an aliphatic polyamide, 5 to 35 wt% of an amorphous polyamide, 5 to 45 wt% of a xylilene-based polyamide and 5 to 50 wt% of a nylon 6-modified ionomer as defined in the claims, and having a haze of not more than 10%, an oxygen permeability at 30°C and 100% RH of not more than 200 $cm^3/m^2 \cdot day \cdot atm$ and an elasticity at 1% elongation of 1.97 x $10^2$ to 19.7 x $10^2$ MPa.

In a sixth aspect of the present invention, there is provided a biaxially stretched food packaging film comprising a five-layered film composed of a polyamide-based mixed resin layer, an adhesive layer, a polyolefins layer, an adhesive layer and a polyamide-based mixed resin layer, in order,

wherein the said polyamide-based mixed resin layer is composed of a polyamide-based mixed resin containing 20 to 70 wt% of an aliphatic polyamide, 5 to 35 wt% of an amorphous polyamide, 5 to 45 wt% of a xylilene-based polyamide and 15 to 50 wt% of a mixture of a nylon 6-modified ionomer as defined in the claims and a polyolefin, the content of the said polyamide-modified ionomer being at least 5 wt% based on the nylon 6-based mixed resin, and having a haze of not more than 10%, an oxygen permeability at 30°C and 100% RH of not more than 200 $cm^3/m^2 \cdot day \cdot atm$ and an elasticity at 1% elongation of 1.97 x $10^2$ to 19.7 x $10^2$ MPa.

DETAILED DESCRIPTION OF THE INVENTION

The aliphatic polyamide used in the present invention is one having a crystalline melting point (Tm) of not more than 270°C, preferably not more than 250°C, more preferably not more than 240°C. It is, for instance, at least one of nylon selected from the group consisting of nylon 6, nylon 9, nylon 11, nylon 12, nylon 66, nylon 69, nylon 610, nylon 6-12, nylon 6-66, nylon 6-69 and nylon 6-66-610, or a copolymer thereof. Of these nylons, nylon 6 and nylon 6-66 are preferred.

The aliphatic polyamide imparts a stretchability to the polyamide-based mixed resin used for forming a layer (s) in the present invention. The said aliphatic polyamide is used in an amount of 20 to 70 wt%, preferably 20 to 65 wt%, more preferably 20 to 60 wt% in the mixed resin. In view of oxygen and moisture permeability of the polyamide-based mixed resin layer, the content of the said aliphatic polyamide is preferably not more than 70 wt% and in view of stretchability of the said polyamide-based mixed resin layer, the aliphatic polyamide content is preferably not less than 20 wt%.

"Amorphous polyamides" referred to in the present invention are the polyamides having an aromatic ring in the main chain and/or side chain, and possessing no or only slight crystallizability. Such polyamides include copolymers of dicarboxylic acids such as terephthalic acid, isophthalic acid, etc., and diamines such as hexamethylenediamine.

For example, a polyamide (nylon 6I-6T) obtained from a dicarboxylic acid composed of a mixture of 10 to 50 wt% of terephthalic acid and 90 to 50 wt% of isophthalic acid, and hexamethylenediamine is preferred.

Amorphous polyamide imparts a stretchability (for example, the heating temperature range usable for stretching is widened) and oxygen-gas barrier properties to the polyamide-based mixed resin. In the present invention, this amorphous polyamide is used in an amount of 5 to 35 wt%, preferably 5 to 30 wt%, more preferably 10 to 25 wt% in the mixed resin. In view of flexibility of the produced film, the amount of the said amorphous polyamide used is preferably not more than 35 wt%. If its amount exceeds 35 wt%, the produced film may have too high stiffness and lose flexibility. In this case, the film is hard to handle when a food is packed thereinto to make a sausage. Also, problems arise in connection to secondary workability, for example, worsened shearing properties (causing wrinkling of the tubular film), a worsened ring processability and shortened working life of film cutter. The amount of the said amorphous polyamide is preferably not less than 5 wt% for maintaining good stretchability of the film.

The "xylilene-based polyamide" used in the present invention is one composed of polyamides synthesized from polycondensation reaction of metaxylilenediamine or a mixture of not less than 60 wt%, preferably not less than 70 wt% of metaxylilenediamine and not more than 40 wt%, preferably not more than 30 wt% of paraxylilenediamine, and $(C_{6-12})\alpha,\omega$-straight chain aliphatic dibasic acid such as adipic acid, sebacic acid, suberic acid, diundecanoic acid, didodecanoic acid or the like. Examples of such xylilene-based polyamides include homopolymers such as polymetaxylilene adipamide, polymetaxylilene sebacamide, polymetaxylilene suberamide and the like, and copolymers such as metaxylilene/paraxylilene adipamide copolymer, metaxylilene/paraxylilene pimeramide copolymer, metaxylilene/paraxylilene azeramide copolymer, metaxylilene/paraxylilene adipamide/sebacamide copolymer and the like.

It is also possible to use copolymers containing an aliphatic amine such as hexamethylenediamine within limits not harmful to the properties of the copolymers. Of such copolymers, those containing polymetaxylilene adipamide (MXD6) are preferred.

This xylilene-based polyamide imparts a heat resistance, an oxygen-gas barrier properties and a property for reducing the moisture permeability to the mixed resin, and it is used in an amount of 5 to 45 wt%, preferably 10 to 40 wt%, more preferably 10 to 35 wt% in the mixed resin. In view of the heat resistance and the oxygen-gas barrier properties, the amount of the said xylilene-based polyamide is preferably not less than 5 wt%, and in view of flexibility and secondary workability of the produced film, the amount of xylilene-based polyamide is preferably not more than 45 wt%.

The polyamide-modified ionomer used in the present invention is obtainable by mixing 10 to 45 wt% nylon 6 with 90 to 55 wt% of an ionomer prepared by neutralizing an ethylene methacrylic acid copolymer (ionomer) with zinc ions , and melting and kneading the resultant mixture at a high temperature of 200 to 350°C to modify the ionomer.

The nylon 6-modified ionomer is composed of zinc-neutralized ethylene-methacrylic acid copolymer (ionomer) and nylon 6, for example, 90 to 55 wt%, preferably 80 to 60 wt% of ionomer and 10 to 45 wt%, preferably 20 to 40 wt% of nylon 6, wherein the ionomer is modified by nylon 6. Of these nylon 6-modified ionomers, the one composed of about 70 wt% of ionomer and about 30 wt% of nylon 6, and having a melting point of 78°C and 223°C (measured by a differential scanning calorimeter) and a crystallization temperature of 63°C, 45°C and 34°C (HI-MILAN TF2249-3, produced by Mitsui Du Pont Chemical Co., Ltd.) is preferred.

The nylon 6-modified ionomer has good compatibility with polyamide and polyolefin, and contributes to the improvement of transparency of the produced film. This nylon 6-modified ionomer is used either singly or in combination with polyolefin. When used singly, the amount of the nylon 6-modified ionomer used is 5 to 50 wt%, preferably 5 to 45 wt%, more preferably 5 to 40 wt% based on the mixed resin.

For contributing to the improvement of film transparency, the said nylon 6-modified ionomer needs to be used in an amount of not less than 5 wt%, and for maintaining a heat resistance and a stretchability of the film, the amount of the said nylon 6-modified ionomer is desired to be not more than 50 wt%.

In the present invention, the said nylon 6-modified ionomer may be used in combination with polyolefins. The polyolefins which can be jointly used with the said nylon 6-modified ionomer in the present invention include homopolymers such as high-density polyethylenes, medium-density polyethylenes, low-density polyethylenes, polypropylene and the like; ethylene- $\alpha$-olefin copolymers such as linear low-density polyethylenes (LLDPE), very low density polyethylenes (VLDPE) and the like; ethylene-based copolymers such as ethylene-vinyl acetate copolymers (vinyl acetate content: 5 to 20 wt%), ethylene-ethyl acrylate copolymers (ethyl acrylate content: 5 to 20 wt%), ethylene-propylene copolymers (ethylene content: 2 to 7 wt%), ethylene-methacrylic acid copolymers (methacrylic acid content: 5 to 20 wt%), ethylene-acrylic acid copolymers (acrylic acid content: 5 to 20 wt%), ionomers and mixtures thereof. Of these polyolefins, ethylene-based copolymers such as ethylene-acrylic acid copolymers and ethylene-methacrylic acid copolymers are preferred in view of miscibility with other resins.

When the said nylon 6-modified ionomer is used in combination with a polyolefin mentioned above, the total amount of the nylon 6-modified ionomer and polyolefin in the mixed resin is 15 to 50 wt%, preferably 15 to 45 wt%, more preferably 15 to 40 wt%. In this case, in view of transparency of the produced film, the nylon 6-modified ionomer resin is used in an amount of at least 5 wt% based on the mixed resin. It is also preferable for maintaining film transparency that the amount of the polyolefin used is not more than 25 wt%, preferably not more than 20 wt% based on the mixed resin.

The thickness of the biaxially oriented film of the present invention, when is a monolayered film composed of the polyamide-based mixed resin, is 10 to 100 μm, preferably 15 to 90 μm, more preferably 20 to 80 μm. When the film thickness is less than 10 μm, the oxygen and moisture vapor barrier properties are unsatisfactory, and when the film thickness exceeds 100 μm, the film has too high stiffness and lacks flexibility.

In the present invention, the said aliphatic polyamide, amorphous polyamide, xylilene-based polyamide, nylon 6-modified ionomer resin and polyolefin can be mixed in a known way. For example, these resins may be mixed in the form of pellets, granules or powder when a film is molded. Various additives such as plasticizer, stabilizer, lubricant, antioxidant, etc., may be added within limits not harmful to the properties of the produced film. It is also possible to properly add a pigment or a dye for color film molding. Any suitable method may be employed for molding of the thus obtained polyamide-based mixed resin. For example, it may be molded into a film by T-die melt extrusion or inflation molding method. Melt extrusion is preferably carried out at a temperature of not more than 280°C.

The molded non-stretched film is then biaxially stretched simultaneously or successively at a temperature of not more than 120°C by tentering or inflation method. The film is stretched 2 to 10 times, preferably 2.5 to 8 times in both machine and transverse directions.

The thus obtained biaxially stretched film has a haze of not more than 10%, preferably not more than 8%, an oxygen permeability of not more than 200 $cm^3/m^2 \cdot day \cdot atm$, preferably not more than 150 $cm^3/m^2 \cdot day \cdot atm$ at 30°C and 100% RH, and a modulus at 1% elongation of $1.97 \times 10^2$ to $19.7 \times 10^2$ MPa, preferably $2.94 \times 10^2$ to $18.6 \times 10^2$ MPa, more preferably $2.94 \times 10^2$ to $17.7 \times 10^2$ MPa. When the said modulus thereof is less than $1.97 \times 10^2$ MPa, the film is too soft, and when the said modulus exceeds $19.7 \times 10^2$ MPa, the film is too hard and unsuited for mechanical processing or secondary workability. The modulus corresponds to a stiffness of a film. If the stiffness of a packaging film is high, when the film is clipped at its both ends with metal for packing meat thereinto to produce a bullet-formed sausage, the clipping force may be weakened to cause loosening or coming-off of the cap by the swelling pressure of the packed material or shrinkage stress of the film during sausage cooking.

The moisture vapor permeability of the film at 40°C and 90% RH is not more than 70 $g/m^2 \cdot day$, preferably not more than 60 $g/m^2 \cdot day$, more preferably not more than 50 $g/m^2 \cdot day$ for preventing loss of weight of the packed material due to dissipation of moisture, and maintaining original flavor and taste of the packed food during long-time storage.

The biaxially stretched film of the present invention may be of a monolayered film of the polyamide-based mixed resin, but may be a multi-layered film obtained by laminating at least one polyamide-based mixed resin layer, at least one adhesive resin layer and at least one polyolefins layer by co-extrusion method or laminating method within limits not impairing the properties of the film.

The polyolefins which can be used for forming the said polyolefins layer include homopolymers such as high-density polyethylenes, medium-density polyethylenes, low-density polyethylenes, polypropylenes and the like; ethylene-α-olefin copolymers such as linear low density polyethylenes (LLDPE), very low density polyethylenes (VLDPE) and the like; and ethylene-based copolymers such as ethylene-vinyl acetate copolymers (vinyl acetate content: 5 to 20 wt%), ethylene-ethyl acrylate copolymers (ethyl acrylate content: 5 to 20 wt%), ethylene-propylene copolymers (ethylene content: 2 to 7 wt%), ethylene-methacrylic acid copolymers (methacrylic acid content: 5 to 20 wt%), ethyleneacrylic acid copolymers (acrylic acid content: 5 to 20 wt%), ionomers and mixtures thereof.

The adhesive resins which can be used for forming the adhesive layer include modified polymers obtained by graft-polymerizing an unsaturated carboxylic acid such as maleic acid, fumaric acid, acrylic acid, an acid anhydride or ester thereof with olefin homopolymers or copolymers such as polyethylenes (including linear low-density polyethylenes), polypropylenes, polybutenes, copolymers of the monomers constituting said polymers, ionomers, ethylene-acrylic acid copolymers, ethylene-vinyl acetate copolymers and mixtures thereof. Among them, maleic anhydride-modified polyethylenes is preferred.

In the case of a multi-layered film, the total thickness thereof is 15 to 150 μm, preferably 20 to 150 μm.

In the multi-layered film, in case only one polyamide-based mixed resin layer is provided, the thickness of said mixed resin layer is not less than 10 μm, preferably 10 to 100 μm, and in case not less than two polyamide-based mixed resin layers are provided, the thickness of one mixed resin layer is not less than 5 μm, with the total thickness of the mixed resin layers being not less than 10 μm, preferably 10 to 100 μm. The thickness of the polyolefins layer is 5 to 100 μm and the thickness of one adhesive layer is 0.1 to 20 μm.

In food packaging, wrinkling of the packages such as sausage packages is a problem to be avoided from the aesthetic viewpoint of the packages as a commercial product. To prevent generation of such wrinkling, it is essential that the film be properly shrunk and maintain a tense state when subjected to cooking or sterilization treatment. The biaxially stretched film of the present invention, is composed of either monolayered or multi-layered film, and preferably has a shrinkability of not less than 5%, more preferably not less than 7%, still more preferably not less than 9%, when immersed in 80°C hot-water for 10 seconds.

Having the above-described properties, the biaxially stretched film of the present invention is suited for packaging of food, especially processed fish and livestock meat, and can facilitate the mechanical packaging process. Also, because of high heat resistance, the film of the present invention can withstand severe treatments such as boiling treatment or retort sterilization, and is free of or minimized in deformation and loss of weight of the packaged material in such treatments. Further, the film of the present invention has good transparency and excellent oxygen-gas barrier properties.

Thus, the biaxially stretched film according to the present invention is excellent in heat resistance, oxygen-gas barrier properties, transparency, moisture permeation resistance, flexibility, stretchability, heat-shrinkable properties, toughness, oil resistance and mechanical strength, and also has appropriate stiffness, excellent shearing properties, excellent ring workability and excellent cutting properties that the working life of the film cutter elongates. These properties are possessed in a well balanced manner.

Some preferred embodiments of layer structure-of of the biaxially stretched food packaging film according to the present invention are described below.

(1) A mono-layered film comprises: layer composed of a polyamide-based mixed resin defined in the present invention.

(2) A mono-layered film comprises: layer composed of a polyamide-based mixed resin containing a polyolefin defined in the present invention.

(3) A three-layered film comprises: layer composed of a polyamide-based mixed resin defined in the present invention or a polyamide-based mixed resin containing a polyolefin defined in the present invention/adhesive layer/ polyolefins layer.

(4) A five-layered film comprises: layer composed of a polyamide-based mixed resin defined in the present invention or a polyamide-based mixed resin containing a polyolefin defined in the present invention/adhesive layer/polyolefins layer/adhesive layer/layer composed of a polyamide-based mixed resin defined in the present invention or a polyamide-based mixed resin containing a polyolefin defined in the present invention.

According to the Examples described later, an aliphatic polyamide which is per se poor in moisture-vapor resistance, is used in combination with an amorphous polyamide and a xylilene-based polyamide in order to impart a moisture-vapor resistance, oxygen-gas barrier properties and a flexibility to the produced film, and further a polyamide-modified ionomer is incorporated therewith in order to improve compatibility. The monolayered or multi-layered film of the present invention has high heat resistance enough to withstand hot water used in boiling treatment, retort sterilization and other treatments, and also has excellent transparency, moisture penetration resistance and oxygen-gas barrier properties, so that the food packaged with the film of the present invention suffers little loss of weight and remains free of change of quality even in long-time storage. Further, because of good transparency of the film, the condition of the material packaged with the film can be confirmed. Moreover, because of appropriate toughness and flexibility, the film of the present invention has good machinability when used for food packaging. Still further, the film of the present invention has good stretching workability and can be produced with ease.

EXAMPLES

The present invention is described in further detail below with reference to the examples thereof.

The various properties of the film shown in the following Examples were determined by the methods described below.

Crystalline melting point (Tm)

Measured by DSC 7 (manufactured by Parkin Elmer Co., Ltd.), 5-10 mg sample was weighed out, kept for 2 minutes at a temperature 40°C higher than the melting point previously determined by melting the resin, then quickly cooled at a rate of 200 °C/min till reaching 0°C, and left in this state for 2 minutes. Thereafter the sample was heated at a rate of 20°C /min and the peak melting temperature observed in the course of this heating was supposed to be crystalline melting point.

Crystallization temperature

Measured by DSC 7 (manufactured by Parkin-Elmer Co., Ltd.) as in the case of crystalline melting point. Successively after determination of crystalline melting point, the sample was kept at a temperature 40°C higher than the melting point for 2 minutes and then cooled at a rate of 20 °C/min, and the peak temperature concomitant with crystallization occurring in the cooling was supposed to be crystallization temperature.

Oxygen permeability (O$_2$TR)

Measured according to ASTM D3985-81 under the conditions of 30°C and 100% RH by using MOCON OXTRAN-100 (manufactured by Modern Control Inc.). It is desirable that the film has an oxygen permeability not more than 200 cm$^3$/m$^2$·day·atm.

Vapor permeability (WVTR)

Measured by using VAPOR PERMEATION TESTER L80-4000 (manufactured by Lyssy Co., Ltd.) under the conditions of 40°C and 50% RH. It is desirable that the film has a moisture vapor permeability not more than 70 g/m$^2$·day.

Haze

Measured according to ASTM 1003 by using Σ80 COLOR MEASURING SYSTEM (manufactured by Nippon Denshoku Kogyo Co., Ltd) and shown by a value calculated as the 40 μm thick film basis. If the haze of a film is not more than 10%, that film may be deemed as an excellent transparent film.

Heat shrinkage

Each sample film was cut to a 50mm x 50mm square along by the machine direction and transverse direction and immersed in 80°C hot water for 10 seconds, and then the size of the film in length and width was measured. The measured value was represented by A mm. The shrinkage of the film in the longitudinal (machine) (L) and transverse (T) directions was calculated from the following formula. It is desirable that the shrinkage of the film is not less than 5% in both machine and transverse directions.

$$\text{Shrinkage (\%)} = (50 - A) \div 50 \times 100$$

Modulus of elasticity

By using the 50mm x 20mm sample films, the secant modulus at 1% displacement (unit: MPa) was measured by using TENSILON UTM-1 (manufactured by Toyo Baldwin Co., Ltd) at a pulling rate of 5 mm/min in a 23°C and 60% RH atmosphere. It is desirable that the film has a secant modulus in the range of 1.97 x 10$^2$ to 19.7 x 10$^2$ MPa.

Examples 1-3

There were prepared the mixed resin compositions composed of 45.5 wt% of nylon 6 (GRILON F34, produced by EMS Co., Ltd.; Tm = 224°C, hereinafter abbreviated as Ny6) as aliphatic polyamide (Examples 1-3), 19.5 wt% of nylon 6I-6T (GRIVORY G21, produced by EMS, hereinafter abbreviated as Ny-A) as amorphous polyamide (Examples 1-3), 20.0 wt% of nylon MXD6 (MX Nylon 6001, produced by Mitsubishi Gas Chemical Co., Ltd.; Tm = 242°C, hereinafter abbreviated as MXD) as xylilene-based polyamide (Examples 1-3), 5.0 wt% of a nylon 6-modified ionomer [HI-MILAN TF2249-3, produced by Mitsui Du Pont Chemical Co., Ltd.; melting point: 78°C, 223°C (measured by DSC); composed of about 30 wt% of Ny6 units and about 70 wt% of zinc-neutralized ethylene-methacrylic acid copolymer units, hereinafter abbreviated as M-IO] (Examples 1-3), and 10 wt% of polyolefins specified below.

The polyolefins used here are an ethylene-acrylic acid copolymer (ESCOR TR5001, produced by Exon Chemical Co., Ltd., hereinafter abbreviated as EAA) (Example 1), an ethylene-methacrylic acid copolymer (NUCREL N410C, -produced by Mitsui Du Pont Chemical Co., Ltd., hereinafter abbreviated as EMAA) (Example 2), and an ionomer (HI-MILAN 1652, produced by Mitsui Du Pont Chemical Co., Ltd. hereinafter abbreviated as IO) (Example 3).

By using a twin-screw extruder (BT-30 manufactured by Plastic Kogaku Kenkyusho Co., Ltd), each of the above-described mixed resin compositions was melted and kneaded at a temperature of 280°C, extruded in a molten state from a circular die and quickly cooled with water of about 15°C to obtain a parison. This parison was heated in a 90°C hot water bath for 4 seconds and then hot air of 130°C was blown thereto to conduct an inflation treatment at a stretching ratio of 3-3.5 times in machine direction and 4-4.5 times in transverse direction.

After inflation treatment, each film was subjected to a heat-treatment for relaxing at a temperature of 95°C for 5 seconds to obtain a stretched film having a thickness of 40 μm and a fold width of 70 mm. The haze, modulus of elasticity, oxygen permeability, vapor permeability and heat shrinkage of the obtained films were measured in the manners described above. The results are shown in Table 1.

Examples 4-13

Ny6, Ny-A, MXD and M-IO used in Example 1, and EMAA used in Example 2 were mixed in the ratios shown in Table 1 and the resultant mixtures were melt extruded, quickly cooled, stretched and relaxed by using the same apparatus and methods as employed in Example 1 to obtain a biaxially stretched films of 40 μm in thickness. The results of measurements of haze, modulus, oxygen permeability, vapor permeability and heat shrinkage of the obtained films are shown in Table 1.

Comparative Example 1

42.0 wt% of Ny6, 18.0 wt% of Ny-A, 20.0 wt% of MXD used in Example 1, and 20.0 wt% of ionomer (IO) used in Example 3 were mixed and the resultant mixture was melt extruded, stretched and relaxed by the same apparatus and methods as used in Example 1 to obtain a biaxially stretched film of 40 μm in thickness. The results of measurements of haze, modulus, oxygen permeability, vapor permeability and heat shrinkage of the obtained film are shown in Table 1.

It is seen from this Comparative Example that when no polyamide-modified ionomer is used, the produced film lacks transparency.

Comparative Examples 2 and 3

By using the mixed resin compositions shown in Table 1, it was tried to produce a stretched film using the same apparatus as employed in Example 1. In the case of the mixed resin composition of Comparative Example 2, it was possible to mold a parison, but the parison heated in the hot water bath had high stiffness and was incapable of inflation treatment, and there could not be obtained a stretched film.

In Comparative Example 2, a sheet was produced by T-die method and this sheet was stretched 3 times in both machine and transverse directions under heating at a temperature of 90°C by using a biaxial stretching machine (manufactured by Toyo Seiki Co,. Ltd) to obtain a stretched film of 40 μm in thickness.

With the mixed resin composition of Comparative Example 3, it was impossible to form a stable parison and no stretched film could be obtained.

In Comparative Example 3, a sheet was produced by T-die method and it was tried to biaxially stretch the sheet under heating at a temperature of 90°C by using a biaxial stretching machine (manufactured by Toyo Seiki Co., Ltd), but it was impossible to obtain a stretched film because of too high stiffness of the sheet.

Two layers of LDPE (SUMIKATHENE F114-1, a low-density polyethylene, produced by Sumitomo Chemical Co., Ltd.) were laminated on both sides of a layer composed of the mixed resin composition of Comparative Example 3 to obtain a three-layered, non-stretched film. Then both outside layers of this multi-layered film were peeled off to obtain a non-stretched film composed of said core layer alone and having 40 μm in thickness, and its haze, modulus of elasticity, oxygen permeability, vapor permeability and heat shrinkage were measured. The results are shown in Table 1.

Examples 14-21

By using the polyamide-based mixed resin compositions shown in Table 2 for the outer and inner layers, a polyethylene-modified resin (ADMER LF500, a maleic anhydride-modified polyolefin, produced by Mitsui Petrochemical Co., Ltd.) for the adhesive layer and a linear low-density polyethylene (MORETEC V-0398-CN, produced by Idemitsu Petrochemical Co., Ltd., density: 0.907) for the core layer, there were produced the co-extruded biaxially stretched films having the layer structure of outer layer/adhesive layer/core layer/adhesive layer/inner layer.

The outer and inner layers were formed by melt extruding said respective polyamide-based mixed resin compositions by using a twin-screw extruder (manufactured by PCM-45, Ikegai Ironworks, Ltd.), the adhesive layer was formed by melt extruding said polyethylene-modified resin by using a 35ϕ extruder and a gear pump and the core layer was formed by melt extruding said linear low-density polyethylene by using a 40ϕ extruder. The respective resin layers were co-extruded by a method in which they were fused together in a circular die and then quickly cooled with 20°C cold water to obtain a 5-layered tubular parison.

The obtained parison was heated in 90°C hot water for 4 seconds and then passed through hot air of 130°C, with air injected into the parison to conduct inflation treatment of 2.4 to 2.8 times in machine direction and 3.5 to 4.2 times in transverse direction to obtain the 5-layered films with the layer thicknesses of 25 μm (outer layer)/1.5 μm (adhesive lyer)/15 μm(core layer)/1.5 μm (adhesive layer)/5 μm (inner layer).

The results of measurements of haze, modulus, oxygen permeability, vapor permeability and heat shrinkage of the obtained films are shown in Table 2.

Table 1 (I)

| Example | Resin composition (wt%) | | | | |
|---|---|---|---|---|---|
| | Ny6 | Ny6I-6T | MXD | M-IO | PO |
| 1 | 45.5 | 19.5 | 20.0 | 5 | 10(EAA) |
| 2 | 45.5 | 19.5 | 20.0 | 5 | 10(EMAA) |
| 3 | 45.5 | 19.5 | 20.0 | 5 | 10(IO) |
| 4 | 42.0 | 18.0 | 20.0 | 20 | - |
| 5 | 42.0 | 18.0 | 20.0 | 10 | 10(EMAA) |
| 6 | 42.0 | 18.0 | 20.0 | 5 | 15(EMAA) |
| 7 | 35.0 | 15.0 | 20.0 | 30 | - |
| 8 | 35.0 | 15.0 | 20.0 | 15 | 15(EMAA) |
| 9 | 28.0 | 12.0 | 20.0 | 20 | 20(EMAA) |
| 10 | 28.0 | 12.0 | 20.0 | 30 | 20(EMAA) |
| 11 | 28.0 | 12.0 | 20.0 | 40 | - |
| 12 | 25.0 | 10.0 | 25.0 | 40 | - |
| 13 | 21.0 | 9.0 | 30.0 | 40 | - |
| Comp. Example | | | | | |
| 1 | 42.0 | 18.0 | 20.0 | - | 20(IO) |
| 2 | 60.0 | - | 40.0 | - | - |
| 3 *5 | - | 80 | 20.0 | - | - |

*5: Non-stretched film

Table 1 (II)

| Example | Film properties | | | | |
|---|---|---|---|---|---|
| | Haze % | Modulus *1 | $O_2$TR *2 | WVTR *3 | H.S. *4 |
| 1 | 7 | 14.7/14.2 | 122 | 36 | 13/11 |
| 2 | 8 | 15.3/14.3 | 120 | 36 | 13/12 |
| 3 | 9 | 14.4/14.2 | 126 | 32 | 12/12 |
| 4 | 3 | 18.6/15.7 | 120 | 38 | 15/12 |
| 5 | 6 | 15.7/15.0 | 115 | 32 | 14/11 |
| 6 | 9 | 15.1/14.1 | 118 | 29 | 14/12 |
| 7 | 4 | 14.2/12.7 | 123 | 33 | 13/13 |
| 8 | 5 | 18.1/15.7 | 128 | 22 | 17/16 |
| 9 | 7 | 17.9/16.3 | 148 | 19 | 16/14 |
| 10 | 4 | 17.7/15.7 | 141 | 19 | 18/19 |
| 11 | 3 | 16.7/16.4 | 142 | 21 | 20/18 |
| 12 | 3 | 18.1/13.7 | 134 | 20 | 19/18 |
| 13 | 3 | 19.1/17.5 | 130 | 20 | 20/17 |
| Comp. Example | | | | | |
| 1 | 26 | 14.2/14.1 | 145 | 26 | 14/14 |
| 2 | 9 | 30.4/27.5 | 80 | 63 | 4/2 |
| 3 | 7 | 32.4/30.4 | 95 | 60 | 0/0 |

(Note) *1: Modulus (machine/transverse), unit: x $10^2$ MPA

*2: $O_2$TR Oxygen permeability, unit: $cm^3/m^2$·day·atm

*3: WVTR Vapor permeability, unit: $g/m^2$·day

*4: H.S. (heat shrinkage) (machine/transverse), unit: %

Table 2

| Example | Inner and outer layers resin composition (wt%) | | | | |
|---|---|---|---|---|---|
| | Ny6 | Ny6I-6T | MXD | M-IO | EMAA |
| 14 | 56.0 | 24.0 | 15.0 | 5.0 | - |
| 15 | 52.5 | 22.5 | 20.0 | 5.0 | - |
| 16 | 49.0 | 21.0 | 25.0 | 5.0 | - |
| 17 | 42.0 | 18.0 | 30.0 | 10.0 | - |
| 18 | 42.0 | 18.0 | 20.0 | 20.0 | - |
| 19 | 42.0 | 18.0 | 20.0 | 10.0 | 10.0 |
| 20 | 42.0 | 18.0 | 20.0 | 5.0 | 15.0 |
| 21 | 38.5 | 16.5 | 25.0 | 10.0 | 10.0 |

Table 2 (II)

| Example | Film properties | | | | |
|---|---|---|---|---|---|
| | Haze % | Modulus *1 | $O_2$TR *2 | WVTR *3 | H.S. *4 |
| 14 | 3 | 9.8/9.8 | 131 | 18 | 12/12 |
| 15 | 4 | 11.5/11.6 | 108 | 15 | 13/12 |
| 16 | 4 | 12.0/11.6 | 105 | 14 | 12/10 |
| 17 | 6 | 12.1/10.9 | 99 | 13 | 12/13 |
| 18 | 4 | 10.8/10.3 | 110 | 14 | 15/13 |
| 19 | 6 | 10.6/10.0 | 115 | 12 | 13/12 |
| 20 | 9 | 10.3/9.8 | 120 | 11 | 14/11 |
| 21 | 8 | 10.8/10.4 | 102 | 10 | 13/13 |

(Note) *1: Modulus (machine/transverse), unit: x $10^2$ MPA

*2: $O_2$TR Oxygen permeability, unit: $cm^3/m^2 \cdot day \cdot atm$

*3: WVTR Vapor permeability, unit: $g/m^2 \cdot day$

*4: H.S. (heat shrinkage) (machine/transverse), unit: %

## Claims

1. A biaxially stretched food packaging film having at least one layer composed of a polyamide-based mixed resin containing 20 to 70 wt% of an aliphatic polyamide, 5 to 35 wt% of an amorphous polyamide, 5 to 45 wt% of a xylilene-based polyamide and 5 to 50 wt% of a nylon 6-modified ionomer and having a haze of not more than 10%, measured according to ASTM 1003, an oxygen permeability at 30°C and 100% RH of not more than 200 $cm^3/m^2 \cdot day \cdot atm$ measured according to ASTM D3985-81 and a secant modulus at 1% elongation of 1.97 x $10^2$ to 19.7 x $10^2$ Mpa, wherein the nylon 6-modified ionomer is a polymer obtainable by mixing 10 to 45 wt% of nylon 6 with 90 to 55 wt% of a zinc-neutralized product of an ethylene-methacrylic acid copolymer, and melting and kneading the resultant mixture at a temperature of 200 to 350°C.

2. A biaxially stretched food packaging film having at least one layer composed of a polyamide-based mixed resin containing 20 to 70 wt% of an aliphatic polyamide, 5 to 35 wt% of an amorphous polyamide, 5 to 45 wt% of a xylilene-based polyamide and 15 to 50 wt% of a mixture of a nylon 6-modified ionomer and a polyolefin wherein the content of said nylon 6-modified ionomer is at least 5 wt% based on the polyamide-based mixed resin, and having a haze of not more than 10%, measured according to ASTM 1003, an oxygen permeability at 30°C and 100% RH of not more than 200 $cm^3/m^2 \cdot day \cdot atm$ measured according to ASTM D3985-81 and a secant modulus at 1% elongation of 1.97 x $10^2$ to 19.7 x $10^2$ Mpa, wherein the nylon 6-modified ionomer is a polymer obtainable by mixing 10 to 45 wt% of nylon 6 with 90 to 55 wt% of a zinc-neutralized product of ethylene-methacrylic acid copolymer, and melting and kneading the resultant mixture at a temperature of 200 to 350°C.

3. A biaxially stretched food packaging film according to Claim 1 or 2, which is a multi-layered film comprising at least one layer composed of the polyamide-based mixed resin, at least one adhesive layer and at least one polyolefin layer.

4. A biaxially stretched food packaging film according to Claim 1 or 2, wherein the aliphatic polyamide is nylon 6, nylon 9, nylon 11, nylon 12, nylon 66, nylon 69, nylon 610, nylon 6-12, nylon 6-66, nylon 6-69, nylon 6-66-610 or a copolymer comprising the monomers constituting said nylons.

5. A biaxially stretched food packaging film according to Claim 1 or 2, wherein the amorphous polyamide is a polycondensate of an aromatic dicarboxylic acid and a diamine, or a copolymer comprising the monomers constituting said polymer.

6. A biaxially stretched food packaging film according to Claim 5, wherein the amorphous polyamide is a polyamide composed of a mixture of 10 to 50 wt% of terephthalic acid and 90 to 50 wt% of isophthalic acid, and hexamethylenediamine.

7. A biaxially stretched food packaging film according to Claim 1 or 2, wherein the xylilene-based polyamide is a polycondensate of metaxylilenediamine, or of a mixture of not less than 60 wt% of metaxylilenediamine and not more than 40 wt% of paraxylilenediamine, and a $(C_{6-12})\alpha,\omega$-straight chain aliphatic dibasic acid.

8. A biaxially stretched food packaging film according to Claim 7, wherein the xylilene-based polyamide is polymetaxylilene adipamide, polymetaxylilene sebacamide, polymetaxylilene speramide, metaxylilene/paraxylilene adipamide copolymer, metaxylilene/paraxylilene pimeramide copolymer, metaxylilene/paraxylilene azeramide copolymer, or metaxililene/paraxylilene adipamide/sebacamide copolymer.

9. A biaxially stretched food packaging film according to Claim 2, wherein the polyolefin is a high-density polyethylene, a medium-density polyethylene, a low-density polyethylene, a very low density polyethylene, an ethylene/ vinyl acetate copolymer, an ethylene/ethylacrylate copolymer, an ethylene/propylene copolymer, an ethylene/methacrylic acid copolymer, an ethylene/acrylic acid copolymer, an ionomer or a mixture thereof.

10. A biaxially stretched food packaging film according to Claim 3, wherein the polyolefin layer is a layer composed of a high-density polyethylene, a medium-density polyethylene, a low-density polyethylene, a polypropylene, a linear low-density polyethylene, a very low density polyethylene, an ethylene/vinyl acetate copolymer, ethylene/ ethyl acrylate copolymer, an ethylene/propylene copolymer, an ethylene/methacrylic acid copolymer, an ethylene/ acrylic acid copolymer, an ionomer or a mixture thereof.

11. A biaxially stretched food packaging film according to Claim 3, wherein the adhesive layer is a layer composed of a modified polymer obtainable by graft-polymerizing an unsaturated carboxylic acid, an acid anhydride or an ester with a polyethylene, a polypropylene, a polybutene, a copolymer composed of the monomers constituting said polymers, an ionomer, an ethylene/acrylic acid copolymer or an ethylene/vinyl acetate copolymer.

12. A biaxially stretched food packaging film according to Claim 3, comprising a three-layered film composed of a polyamide-based mixed resin layer, an adhesive layer and a polyolefins layer, in order.

13. A biaxially stretched food packaging film according to Claim 1, comprising a five-layered film composed of a polyamide-based mixed resin layer, an adhesive layer, a polyolefin layer, an adhesive layer and a polyamide-based mixed resin layer, in order.

14. A biaxially stretched food packaging film according to Claim 2, comprising a three-layered film composed of a layer of polyamide-based mixed resin containing polyolefin, an adhesive layer and a polyolefin layer, in order.

15. A biaxially stretched food packaging film according to Claim 2, comprising a five-layered film composed of a layer of polyamide-based mixed resin containing polyolefin, an adhesive layer, a polyolefin layer, an adhesive layer and a layer of polyamide-based mixed resin containing polyolefin, in order.

16. A process for the manufacture of biaxially stretched food packaging films according to any one of the preceding claims, characterised by comprising the following steps:

i) mixing the aliphatic polyamide, the amorphous polyamide, the xylilene based polyamide and the nylon 6-modified ionomer resin plus any further additives as required,
ii) molding the thus obtained polyamide based mixed resin by a known method, and
iii) biaxially stretching the non-stretched film simultaneously or successively at a temperature of not more than 120°C.

**Patentansprüche**

1. Biaxial gereckte Nahrungsmittelverpackungsfolie mit zumindest einer Schicht, die sich aus einem gemischten Harz auf Polyamidbasis zusammensetzt, umfassend 20 bis 70 Gew.% eines aliphatischen Polyamides, 5 bis 35 Gew. % eines amorphen Polyamides, 5 bis 45 Gew.% eines Polyamides auf Xylilenbasis und 5 bis 50 Gew.% eines mit Nylon 6 modifizierten Ionomers und mit einem Schleier von nicht mehr als 10%, gemessen entsprechend ASTM 1003, einer Sauerstoffpermeabilität bei 30°C und 100% RH von nicht mehr als 200 $cm^3/m^2$ x d x atm, gemessen entsprechend ASTM D3985-81 und einem Sekantenmodul bei 1%-iger Dehnung von $1,97 \times 10^2$ bis $19,7 \times 10^2$ MPa, worin das mit Nylon 6 modifizierte Ionomer ein Polymer ist, erhältlich durch Mischen von 10 bis 45 Gew.% Nylon 6 mit 90 bis 55 Gew.% eines mit Zink neutralisierten Produkts eines Ethylen-Methacrylsäure-Copolymers, und Schmelzen und Kneten der resultierenden Mischung bei einer Temperatur von 200 bis 350°C.

2. Biaxial gereckte Nahrungsmittelverpackungsfolie mit zumindest einer Schicht, die sich aus einem gemischten Harz auf Polyamidbasis zusammensetzt, umfassend 20 bis 70 Gew.% eines aliphatischen Polyamids, 5 bis 35 Gew.% eines amorphen Polyamids, 5 bis 45 Gew.% eines Polyamids auf Xylilenbasis und 15 bis 50 Gew.% einer Mischung aus einem mit Nylon 6 modifizierten Ionomer und einem Polyolefin, worin der Gehalt des mit Nylon 6 modifizierten Ionomers zumindest 5 Gew.% ist, bezogen auf das gemischte Harz auf Polyamidbasis, und mit einem Schleier von nicht mehr als 10%, gemessen entsprechend ASTM 1003, einer Sauerstoffpermeabilität bei 30°C und 100% RH von nicht mehr als 200 $cm^3/m^2$ x d x atm, gemessen entsprechend ASTM D3985-81 und einem Sekantenmodul bei 1%-iger Dehnung von $1,97 \times 10^2$ bis $19,7 \times 10^2$ MPa, worin das mit Nylon 6 modifizierte Ionomer ein Polymer ist, erhältlich durch Mischen von 10 bis 45 Gew.% Nylon 6 mit 90 bis 55 Gew.% eines mit Zink neutralisierten Produkts eines Ethylen-Meethacrylsäure-Copolymers und Schmelzen und Kneten der resultierenden Mischung bei einer Temperatur von 200 bis 350°C.

3. Biaxial gereckte Nahrungsmittelfolie nach Anspruch 1 oder 2, die eine Vielschichtfolie ist, umfassend zumindest eine Schicht, die sich aus dem gemischten Harz auf Polyamidbasis zusammensetzt, zumindest eine Adhäsivschicht und zumindest eine Polyolefinschicht.

4. Biaxial gereckte Nahrungsmittelverpackungsfolie nach Anspruch 1 oder 2, worin das aliphatische Polyamid Nylon 6, Nylon 9, Nylon 11, Nylon 12, Nylon 66, Nylon 69, Nylon 610, Nylon 6-12, Nylon 6-66, Nylon 6-69, Nylon 6-66-610 oder ein Copolymer ist, umfassend die Monomere, die diese Nylonarten ausmachen.

5. Biaxial gereckte Nahrungsmittelverpackungsfolie nach Anspruch 1 oder 2, worin das amorphe Polyamid ein Polykondensat einer aromatischen Dicarbonsäure und eines Diamins oder ein Copolymer ist, das die Monomere umfaßt, die das Polymer ausmachen.

6. Biaxial gereckte Nahrungsmittelverpackungsfolie nach Anspruch 5, worin das amorphe Polyamid ein Polyamid ist, das sich aus einer Mischung von 10 bis 50 Gew.% Terephthalsäure und 90 bis 50 Gew.% Isophthalsäure und Hexamethylendiamin zusammensetzt.

7. Biaxial gereckte Nahrungsmittelverpackungsfolie nach Anspruch 1 oder 2, worin das Polyamid auf Xylilenbasis ein Polykondensat aus Metaxylilendiamin oder einer Mischung von nicht weniger als 60 Gew.% Metaxylidendiamin und nicht mehr als 40 Gew.% Paraxylilendiamin und einer $(C_{6-12})\alpha,\omega$-geradkettigen, aliphatischen zweibasischen Säure ist.

8. Biaxial gereckte Nahrungsmittelverpackungsfolie nach Anspruch 7, worin das Polyamid auf Xylilenbasis Polymetaxylilenadipamid, Polymetaxylilensebacamid, Polymetaxylilensperamid, Metaxylilen/Paraxylilenadipamid-Copolymer, Metaxylilen/Paraxylilenpimelamid-Copolymer, Metaxylilen/Paraxylilenazeramid-Copolymer oder Metaxylilen/Paraxylilenadipamid/Sebacamid-Copolymer ist.

9. Biaxial gereckte Nahrungsmittelverpackungsfolie nach Anspruch 2, worin das Polyolefin ein Polyethylen hoher Dichte, Polyethylen mittlere Dichte, Polyethylen niedriger Dichte, Polyethylen sehr niedriger Dichte, Ethylen/Vinylacetat-Copolymer, Ethylen/Ethylacrylat-Copolymer, Ethylen/Propylen-Copolymer, Ethylen/Methacrylsäure-Copolymer, Ethylen/Acrylsäurecopolymer, ein Ionomer oder eine Mischung davon ist.

10. Biaxial gereckte Nahrungsmittelverpackungsfolie nach Anspruch 3, worin die Polyolefinschicht eine Schicht ist, die sich aus einem Polyethylen hoher Dichte, Polyethylen mittlerer Dichte, Polyethylen niedriger Dichte, Polypropylen, linearen Polyetyhlen niedriger Dichte, Polyethylen sehr niedriger Dichte, Ethylen/Vinylacetatcopolymer, Ethylen/Ethylacrylat-Copolymer, Ethylen/Propylencopolymer, Ethylen/Methacrylsäurecopolymer, Ethylen/Acrylsäurecopolymer, Ionomer oder einer Mischung davon zusammensetzt.

11. Biaxial gereckte Nahrungsmittelverpackungsfolie nach Anspruch 3, worin die Adhäsivschicht eine Schicht ist, die sich aus einem modifizierten Polymer zusammensetzt, das durch Pfropfpolymerisieren einer ungesättigten Carbonsäure, eines Säureanhydrides oder eines Esters mit einem Polyethylen, Polypropylen, Polybuten, einem Copolymer, das sich aus den Monomeren zusammensetzt, die die Polymere ausmachen, einem Ionomer, Ethylen/Acrylsäurecopolymer oder Ethylen/Vinylacetatcopolymer erhältlich ist.

12. Biaxial gereckte Nahrungsmittelverpackungsfolie nach Anspruch 3, umfassend eine dreischichtige Folie, die sich aus einer gemischten Harzschicht auf Polyamidbasis, einer Adhäsivschicht und einer Polyolefinschicht in dieser Reihenfolge zusammensetzt.

13. Biaxial gereckte Nahrungsmittelverpackungsfolie nach Anspruch 1, umfassend eine fünfschichtige Folie, die sich aus einer gemischten Harzschicht auf Polyamidbasis, einer Adhäsivschicht, einer Polyolefinschicht, einer Adhäsivschicht und einer gemischten Harzschicht auf Polyamidbasis in dieser Reihenfolge zusammensetzt.

14. Biaxial gereckte Nahrungsmittelverpackungsfolie nach Anspruch 2, umfassend eine dreischichtige Folie, die sich aus einer Schicht aus einem gemischten Harz auf Polyamidbasis mit einem Polyolefin, einer Adhäsivschicht und einer Polyolefinschicht in dieser Reihenfolge zusammensetzt.

15. Biaxial gereckte Nahrungsmittelverpackungsfolie nach Anspruch 2, umfasend eine fünfschichtige Folie, die sich aus einer Schicht aus einem gemischten Harz auf Polyamidbasis mit Polyolefin, einer Adhäsivschicht, Polyolefinschicht, Adhäsivschicht und einer Schicht aus gemischtem Harz auf Polyamidbasis mit einem Polyolefin in dieser Reihenfolge zusammensetzt.

16. Verfahren zur Erzeugung einer biaxial gereckten Nahrungsmittelverpackungsfolie nach einem der vorhergehenden Ansprüche, gekennzeichnet durch die folgenden Schritte:

i) Mischen des aliphatischen Polyamides, des amorphen Polyamides, des Polyamides auf Xylilenbasis und des mit Nylon 6 modifizierten Ionomerharzes und irgendwelchen weiteren Additiven, falls erforderlich,

ii) Formen des somit erhaltenen gemischten Harzes auf Polyamidbasis durch ein bekanntes Verfahren, und

iii) gleichzeitiges oder aufeinanderfolgendes biaxiales Recken der nicht gereckten Folie bei einer Temperatur von nicht mehr als 120°C.

## Revendications

1. Film d'emballage alimentaire étiré selon deux axes, comportant au moins une couche comprenant une résine mixte à base de polyamide contenant de 20 à 70 % en poids d'un polyamide aliphatique, de 5 à 35 % en poids d'un polyamide amorphe, de 5 à 45 % en poids d'un polyamide dérivé de xylylène et de 5 à 50 % en poids d'un ionomère modifié par le Nylon-6, et ayant un taux de voilage non supérieur à 10 % mesuré selon la norme ASTM 1003, une perméabilité à l'oxygène, à 30 °C et à une humidité relative de 100 %, non supérieure à 200 cm$^3$/m$^2$. jour.atm mesurée selon la norme ASTM D3985-81, et un module sécant à un allongement de 1% de 1,97 x 10$^2$ jusqu'à 19,7 x 10$^2$ MPa, l'ionomère modifié par le Nylon-6 étant un polymère qui peut être obtenu en mélangeant de 10 à 45 % en poids de Nylon-6 avec de 90 à 55 % en poids d'un produit neutralisé par le zinc d'un copolymère d'éthylène et d'acide méthacrylique, et en fondant et en malaxant le mélange résultant à une température de 200 à 350 °C.

2. Film d'emballage alimentaire étiré selon deux axes comportant au moins une couche comprenant une résine mixte à base de polyamide contenant de 20 à 70 % en poids d'un polyamide aliphatique, de 5 à 35 % en poids d'un polyamide amorphe, de 5 à 45 % en poids d'un polyamide à base de xylylène et de 15 à 50 % en poids d'un mélange d'un ionomère modifié par le Nylon-6 et d'une polyoléfine, la teneur en ledit ionomère modifié par le Nylon-6 étant d'au moins 5 % en poids par rapport à la résine mixte à base de polyamide, et ayant un taux de voilage non supérieur à 10 % mesuré selon la norme ASTM 1003, une perméabilité à l'oxygène, à 30 °C et à une humidité relative de 100 %, non supérieure à 200 cm$^3$/m$^2$.jour.atm, mesurée selon la norme ASTM D3985-81, et un module sécant à un allongement de 1 %, de 1,97 x 10$^2$ à 19,7 x 10$^2$ MPa, l'ionomère modifié par le Nylon-6 étant un polymère qui peut être obtenu en mélangeant de 10 à 45 % en poids de Nylon-6 avec de 90 à 55 % en poids d'un produit neutralisé par le zinc d'un copolymère d'éthylène et d'acide méthacrylique, et en fondant et en malaxant le mélange résultant à une température de 200 à 350 °C.

3. Film d'emballage alimentaire étiré selon deux axes, conformément à la revendication 1 ou 2, consistant en un film multicouche comprenant au moins une couche de la résine mixte à base de polyamide, au moins une couche d'adhésif et au moins une couche de polyoléfine.

4. Film d'emballage alimentaire étiré selon deux axes conformément à la revendication 1 ou 2, dans lequel le polyamide aliphatique est le Nylon-6, le Nylon-9, le Nylon-11, le Nylon-12, le Nylon-66, le Nylon-69, le Nylon-610, le Nylon-6-12, le Nylon-6-66, le Nylon-6-69 et le Nylon-6-66-610 ou un copolymère comprenant les monomères constituant lesdits nylons.

5. Film d'emballage alimentaire étiré selon deux axes conformément à la revendication 1 ou 2, dans lequel le polyamide amorphe est un produit de polycondensation d'un acide dicarboxylique aromatique et d'une diamine, ou un copolymère comprenant les monomères constituant ledit polymère.

6. Film d'emballage alimentaire étiré selon deux axes conformément à la revendication 5, dans lequel le polyamide amorphe est un polyamide dérivé d'un mélange de 10 à 50 % en poids d'acide téréphtalique et de 90 à 50 % en poids d'acide isophtalique, et d'hexaméthylènediamine.

7. Film d'emballage alimentaire étiré selon deux axes conformément à la revendication 1 ou 2, dans lequel le polyamide dérivé de xylylène est un produit de polycondensation de la méthaxylylènediamine, ou d'un mélange de pas moins de 60 % en poids de métaxylylènediamine et de pas plus de 40 % en poids de paraxylylènediamine, et d'un $\alpha,\omega$-diacide aliphatique à chaîne linéaire en $C_6$ à $C_{12}$.

8. Film d'emballage alimentaire étiré selon deux axes conformément à la revendication 7, dans lequel le polyamide dérivé de xylylène est le polymétaxylylène adipamide, le polymétaxylylène sébaçamide, le polymétaxylilène subéramide, un copolymère de métaxylylène/paraxylylène adipamide, un copolymère de métaxylylène/paraxylylène pimélamide, un copolymère de métaxylylène/paraxylylène azéramide, ou un copolymère de métaxylylène/paraxylylène adipamide/sébaçamide.

9. Film d'emballage élémentaire à étirage biaxial conformément à la revendication 2, dans lequel la polyoléfine est un polyéthylène de haute densité, un polyéthylène de densité moyenne, un polyéthylène de basse densité, un polyéthylène de très basse densité, un copolymère d'éthylène et d'acétate de vinyle, un copolymère d'éthylène et d'acrylate d'éthyle, un copolymère d'éthylène et de propylène, un copolymère d'éthylène et d'acide méthacrylique, un copolymère d'éthylène et d'acide acrylique, un ionomère ou un mélange de ceux-ci.

10. Film d'emballage alimentaire étiré selon deux axes conformément à la revendication 3, dans lequel la couche de polyoléfine est une couche comprenant un polyéthylène de haute densité, un polyéthylène de moyenne densité, un polyéthylène de basse densité, un polypropylène, un polyéthylène linéaire de basse densité, un polyéthylène de très basse densité, un copolymère d'éthylène et d'acétate de vinyle, un copolymère d'éthylène et d'acrylate d'éthyle, un copolymère d'éthylène et de propylène, un copolymère d'éthylène et d'acide méthacrylique, un copolymère d'éthylène et d'acide acrylique, un ionomère ou un mélange de ceux-ci;

11. Film d'emballage alimentaire étiré selon deux axes conformément à la revendication 3, dans lequel la couche d'adhésif est une couche comprenant un polymère modifié qui peut être obtenu par polymérisation par greffage d'un acide carboxylique insaturé, d'un anhydride d'acide ou d'un ester, avec un polyéthylène, un polypropylène, un polybutène, un copolymère dérivé des monomères constituant lesdits polymères, un ionomère, un copolymère d'éthylène et d'acide acrylique ou un copolymère d'éthylène et d'acétate de vinyle.

12. Film d'emballage alimentaire étiré selon deux axes conformément à la revendication 3, comprenant un film à trois couches comportant, dans l'ordre, une couche de résine mixte à base de polyamide, une couche d'adhésif et une couche de polyoléfines.

13. Film d'emballage alimentaire étiré selon deux axes conformément à la revendication 1, comprenant un film à cinq couches comportant, dans l'ordre, une couche de résine mixte à base de polyamide, une couche d'adhésif, une couche de polyoléfine, une couche d'adhésif et une couche de résine mixte à base de polyamide.

14. Film d'emballage alimentaire étiré selon deux axes conformément à la revendication 2, comprenant un film à trois couches comportant, dans l'ordre, une couche de résine mixte à base de polyamide contenant une polyoléfine, une couche d'adhésif et une couche de polyoléfine.

15. Film d'emballage alimentaire étiré selon deux axes conformément à la revendication 2, comprenant un film à cinq couches, comportant, dans l'ordre, une couche de résine mixte à base de polyamide contenant une polyoléfine, une couche d'adhésif, une couche de polyoléfine, une couche d'adhésif et une couche de résine mixte à base de polyamide contenant une polyoléfine.

**16.** Procédé de production de films d'emballage alimentaire étirés selon deux axes, conformément à l'une quelconque des revendications précédentes, caractérisé en ce qu'il comprend les étapes suivantes :

i) le mélange du polyamide aliphatique, du polyamide amorphe, du polyamide dérivé de xylylène et de la résine d'ionomère modifiée par le Nylon-6 avec tous autres additifs requis,

ii) le moulage de ladite résine mixte à base de polyamide obtenue selon un procédé connu, et

iii) l'étirage biaxial du film non étiré, simultanément ou successivement, à une température non supérieure à 120 °C.